(19) Europäisches Patentamt
European Patent Office
Office européen des brevets

(11) EP 0 567 438 B1

(12) **EUROPEAN PATENT SPECIFICATION**

(45) Date of publication and mention of the grant of the patent:
**13.01.1999 Bulletin 1999/02**

(51) Int. Cl.[6]: **C07F 15/00**, A61K 31/28

(21) Application number: **93830160.3**

(22) Date of filing: **09.04.1993**

(54) **Optically pure cis-oxalato(trans-l-1,2-cyclohexanediamine)Pt(II) and process for resolving optical isomers of a platinum complex compound**

Optisch reines Cis-oxalato(trans-l-1,2-Cyclohexandiamine)Pt(II) und Verfahren zur Auflösung von optischen Isomeren einer Platinkomplexverbindung

Cis-oxalato(trans-l-1,2-cyclohexanediamine)Pt(II) optiquement pure et procédé de résolution d'isoméres optiques d'un complexe de platine

(84) Designated Contracting States:
**BE CH DE ES FR GB IT LI NL**

(30) Priority: **22.04.1992 JP 129668/92**
**12.01.1993 JP 19508/93**

(43) Date of publication of application:
**27.10.1993 Bulletin 1993/43**

(73) Proprietor:
**Tanaka Kikinzoku Kogyo K.K.**
**Chuo-ku Tokyo (JP)**

(72) Inventors:
- **Tozawa, Takeshi,**
  **c/o TANAKA KIKINZOKU KOGYO**
  **Hiratsuka-shi, Kanagawa (JP)**
- **Komoda, Yasunobu,**
  **c/o TANAKA KIKINZOKU KOGYO**
  **Hiratsuka-shi, Kanagawa (JP)**
- **Ohnishi, Junji,**
  **c/o TANAKA KIKINZOKU KOGYO**
  **Hiratsuka-shi, Kanagawa (JP)**
- **Masuda, Yukie**
  **Shinmachi, Hiratsuka-shi Kanagawa (JP)**
- **Taniuchi, Junichi**
  **Shinmachi, Hiratsuka-shi, Kanagawa (JP)**
- **Nakanishi, Chihiro,**
  **Shinmachi, Hiratsuka-shi, Kanagawa (JP)**
- **Okamoto, Koji**
  **Shinmachi, Hiratsuka-shi, Kanagawa (JP)**
- **Ohnishini, Yuko**
  **Shinmachi, Hiratsuka-shi, Kanagawa (JP)**

(74) Representative:
**Pellegri, Alberto et al**
**c/o Società Italiana Brevetti S.p.A.**
**Via Puccini, 7**
**21100 Varese (IT)**

(56) References cited:
**EP-A- 0 154 589** **US-A- 4 169 846**
**US-A- 4 550 187**

- **CHEMICAL ABSTRACTS, vol. 87, 1977, Columbus, Ohio, US; abstract no. 298z, KIDANI, Y. ET AL. page 28 ; & J. CLIN. HEMATOL. ONCOL. vol. 7, no. 1, 1977, pages 197 - 209**
- **CHEMICAL ABSTRACTS, vol. 101, 1984, Columbus, Ohio, US; abstract no. 141461s, BRUCK, M.A. ET AL. page 679 ; & INORG. CHIM. ACTA vol. 92, no. 4, 1984, pages 279 - 284**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 567 438 B1

## Description

*BACKGROUND OF THE INVENTION*

1. *Field of the invention*

The present invention relates to a process for resolving optical isomers of dextrorotatory and levorotatory platinum complexes. More in particular, the invention relates to an optically pure cis-oxalato (trans-l-1,2-cyclohexanediamine) Pt(II) carcinostatic and therapeutic having enhanced properties.

2. *Description of the prior art*

A platinum complex compound of the following formula (1) below:

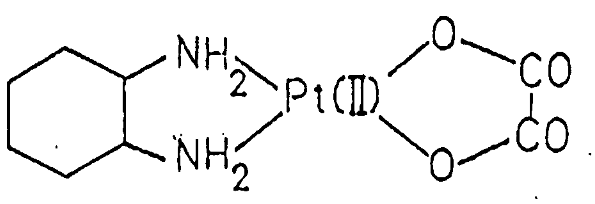

(1)

is known to have been tested as a raw material of carcinostatic properties. A compound of Formula (1) may be obtained by reacting potassium haloplatinate [$K_2Pt(II)X_1$] (where X is chlorine, bromine or iodine) and 1,2-cyclohexanediamine to produce a compound of the following formula:

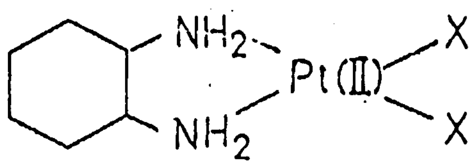

(2)

To an aqueous solution of this product, two equivalences of a silver nitrate solution are added to precipitate and filter off the chlorine, the bromine or the iodine present in the compound of Formula (2) as silver chloride, silver bromide or silver iodide, respectively, and adding to the filtrate thereof an organic dibasic acid for cyclization. However a compound of Formula (1), as produced by this process, is generally a mixture of a dextrorotatory substance (d-isomer) and a levorotatory substance (l-isomer). Often, only one of the dextrorotatory substance and the levorotatory substance is found to be effective. For example, only a dextrorotatory substance of the platinum compound of Formula (1) may possess an activity as a carcinostatic agent, while a levorotatory substance may exhibit toxicity.

US-A-4,169,846 discloses cis-platinum (II) complexes of 1,2-diaminocyclohexanes as having an anti-tumor activity.

The article: "Synthesis and anti-tumor activities of platinum (II) complexes of 1,2-diaminocyclohexane isomers and their related derivatives" by Kidani, et al., Journal Clin. Hematol. Oncol. 1977, 7(1), 197-209, reports on the anti-tumor activity of several Pt(II) complexes.

The article: "The crystal structures and absolute configurations of the anti-tumor complexes platinum (oxalato) (1R,2R-cyclohexanediamine and platinum (malonato) (1R,2R- cyclohexanediamine)" by Bruck, et al., Inorg. Chim Acta 1984, 92(4), 279-84, reports on cryptographic analysis of Pt complexes.

Even when a dextrorotatory dihalogen complex compound of Formula (2) is employed as a starting material in an attempt to use only the dextrorotatory compound of Formula (2), retention of optical isomerism in the platinum complex cannot be ensured. In practice, according to the state of the art before the present invention, an optical isomer of substantially 100% purity could not be obtained.

It would be highly desirable, however, to find a way of optically resolving the dextrorotatory substance and the levorotatory substance at nearly 100% efficiency also in the case of Pt complexes.

Furthermore, a process of accurately determining the optical purity of a complex platinum compound so far has not been available. The purity of a conventional mixture of a dextrorotatory substance and a levorotatory substance has been estimated only indirectly through its angle or rotation or circular duchroism.

The industrial value of a compound of Formula (1) useful as an intermediate of raw material for producing a pharmaceutically active substance would increase remarkably if optical purity of the metal complex compound can be stated exactly.

More in particular, while a platinum (II) complex of 1,2-cyclohexanediamine is known to, exhibit a carcinostatic activity, the complex is normally a mixture of isomers, synthesized from a mixture of isomers (cis, trans-d and trans-l) existing in a 1,2-cyclohexanediamine, used as a starting material.

As a matter of fact the trans and cis isomers of the 1,2-cyclohexanediamine may be optically resolved by means of a metal complex utilizing the difference of solubilities between the two isomers. For example, in Japanese patent publication No. 60-41077, while the cis-isomer is precipitated by adding a nickel (II) salt to a nonaqueous solvent such as pure methanol containing the two isomers, the trans-isomer is precipitated by adding the nickel salt and hydrochloric acid and aqueous sodium hydroxide. Since the trans-isomer of the nickel complex is slightly soluble in water and easily soluble in an organic solvent and the cis isomer is slightly soluble in an organic solvent and easily soluble in water, a process of optical resolution (separation of the two isomers) can be conducted.

Although a cis-oxalato (trans-l-1,2-cyclohexanediamine) Pt(II) is reported to have been synthetically obtained through a reaction between the trans-l-1,2-cyclohexanediamine obtained in accordance with the above method and $K_2PtCl_4$ (Japanese patent publication No. 60-41077), this has been found to be a mixture with cis-oxalato (trans-d-1,2-cyclohexanediamine) Pt(II). No data are presented in the Japanese patent publication No. 60-41077 which would confirm an optical purity of the cis-oxalato (trans-l-1,2-cyclohexaneidamine) Pt(II) nor the influence of optical purity on activity. That disclosure merely reports circular duchroism (CD), indicating the steric configuration, and the angle of rotation ($[\alpha]$p) indicating the optical activity of the Pt complex. On the other hand, no differences can be determined between respective elemental analysis values, infrared spectra and electron spectra of the isomers mentioned in the Japanese patent publication No. 60-41077.

The cited Japanese patent publication is silent about isolation of a complex consisting of two trans-dl isomers. The fundamental questions of optical purity of the isolated Pt(II) complex of its therapeutical importance remain.

## *SUMMARY OF THE INVENTION*

A first objective of the invention, in the light of the above problems and shortcomings of the prior art, is to provide a process of optically resolving an optically active platinum complex compound.

Another object of the invention is to provide a process of optically resolving an optically active platinum complex compound into a dextrorotatory substance and a levorotatory substance one of which may be useful as an intermediate or raw material for preparing a pharmaceutically active substance.

Yet another object of the present invention is to provide a platinum complex compound having a high optical purity.

A further object of the invention is to provide a platinum complex compound useful as an intermediate or as a raw material for preparing a pharmaceutically active agent.

The process of the present invention of optically resolving an optically active platinum complex compound is characterized in that a mixture of a d-isomer and an l-isomer is optically resolved by means of a high performance liquid chromatography employing a column packed with a chiral filler.

According to the present invention, the optical resolution of a platinum complex compound essentially consisting of a mixture of a dextrorotatory substance and a levorotatory substance which notably cannot be resolved according to a conventional resolution method because of extremely small structural difference, can be easily performed by exploiting the characteristics of a chiral packing. The method of the invention is especially useful in case of a platinum complex compound of Formula (1), which may be employed as active principle of a carcinostatic substance because a substance containing only one of the two optical rotation isomers having desirable therapeutical activities can be prepared.

Moreover, in accordance with the high performance liquid chromatography (HPLC) method of separation of the present invention, the amount of residual impurity may be accurately determined by comparing peak heights of the two optical rotation isomers appearing on a chromatograph so that an accurate determination of the optical purity may be performed constantly during the purification process.

The chiral filler which may be employed in the process of the present invention includes a cellulose ester derivative, a cellulose carbamate derivative, an amylase carbamate derivative, a polymethacrul acid ester, $\beta$-and-$\gamma$-cyclodextrin, a polymethacrylamide derivative, an acidic glycoprotein, L-proline, hydroxyproline, L-valine, a filler prepared by adsorbing or binding (1R,2S)-2-carboxymetylamino-1,2-diphenylethanol to silica gel, a filler prepared by coordinating a metal ion to one of the said fillers, a filler prepared by adsorbing or binding a protein to aminated silica gel, a filler packed with a crown ether, a urea derivative chiral to silica gel treated with (3-aminopropyl)triethoxysilane, N(3,5-dinitrobensoyl)-(R)-phenylglycine, DNB-L-leucine, (s)-1($\alpha$-naphtyl)-ethylamine and a filler bonding to (s)-2-(4-chlorophenyl) isovaleric acid. Depending on the kind of the platinum complex compound to be optically resolved, one of these fillerd or a mixture of two or more thereof may be employed satisfactoritly.

Comparative tests conducted on optically pure (trans-l-1,2-cyclohexanediamine) Pt(II) have surprisingly shown an outstanding increase of effectiveness when employed for preparing a carcinostatic compound.

The cis-oxalato (trans-l-1,2-cyclohexanediamine) Pt(II) of optically high purity of the present invention may be prepared by completely resolving Pt(II) optical isomers.

Because the high purity complex compound of the present invention contains no cis-oxalato (trans-d-1,2-cyclohexanediamine) Pt(II) (an optically isomer thereof), remarkably improved results of acute toxicity have been obtained in comparison with a cis-oxalato (trans-l-1,2-cyclohexanediamine) Pt(II) as could be obtained according to the methods of the prior art, which had been found to contain also the optical isomer thereof. These findings indicate that the optically pure Pt(II) complex of the invention may provide more effective and safer medicines.

The melting point of the optically pure cis-oxalato (trans-l-1,2-cyclohexanediamine) Pt(II) of the invention is lower than of that of a cis-oxalato (trans-l-1,2-cyclohexanidiamine) Pt(II) of the prior art probably because of the absence of optical isomer impurities.

*BRIEF DESCRIPTION OF THE DRAWINGS*

**Figure 1** is a chromatograph obtained in performing the optical resolution process of Example 1 wherein the upper portion thereof shows an amount of elution as a relative absorption amount of ultraviolet ray at 254 nm, and the lower portion thereof shows the amount of elution as a relative degree of rotation.

**Figure 2** is a chromatograph obtained by HPLC of cis-oxalato (trans-l-1,2-cyclohexanediamine) Pt(II) before optical resolution as carried out in Example A, Example B and Example C. The upper portion shows the amount of elution per unit time as a relative absorption amount of ultraviolet ray at 254 nm, and the lower portion 1 shows the amount of elution per unit time as a relative degree or rotation.

**Figure 3** is a chromatrograph of trans-d l-1,2-cyclohexanediamine obtained in Example B.1.

*DETAILED DESCRIPTION OF THE INVENTION*

The process of the present invention is based on quantitatively resolving a mixture of a dextrorotatory substance and a levorotatory substance by means of high performance liquid chromatography employing a separation column packed with a chiral filler.

A platinum complex compound which can be optically resolved in accordance with the process of the present invention is a compound designated by Formula (3) below:

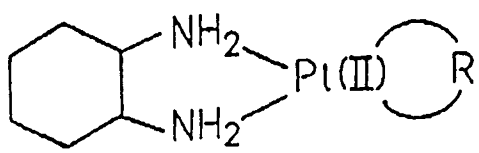

(3)

wherein R may be a chemical structure belonging to the following groups:

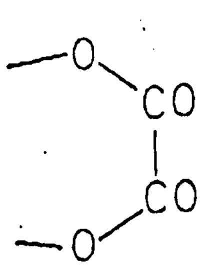

(4)

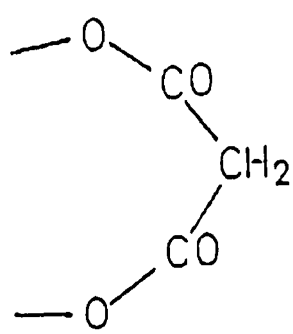

(5)

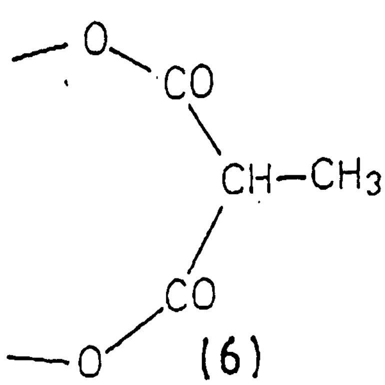

(6)

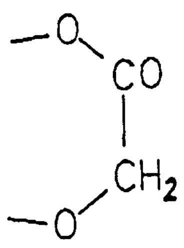

(7)

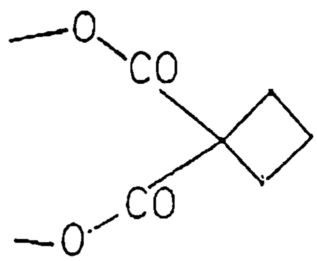

(8)

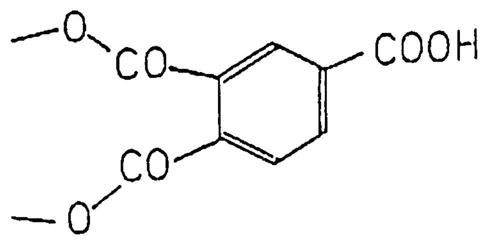

(9)

The compounds of Formula (3) includes two optical isomers which differ form each other by a bonding direction of two amine groups of the four ligands coordinating a platinum metal which represents the central metal of the complex compound, that is, a dextrorotatory substance and a levorotatory substance. The structural difference between the two optical isomers is so small that they cannot be optically resolved in accordance with a conventional resolution method.

The present inventors have found an HPLC method employing an optically active chiral filler which is capable of effectively resolving optical isomers by exploiting the small structural difference that exists. The inventors have found that many chiral fillers are capable of ensuring optical resolution of a platinum complex compound which is the mixture of a dextrorotatory substance and a levorotatory substance.

Suitable chiral fillers include a cellulose ester derivative, a cellulose carbamate derivative, an amylose carbamate derivative, a polymethacryl acid ester, β-and-γ-cyclodextrin, a polymethacrylamine derivative, an acidic glycoprotein, L-proline, hydroxyproline, L-valine. a filler prepared by adsorbing or binding (1R,2S)-2-carboxymetylamino-1,2-diphenylethanol to silical gel a filler prepared by coordinating a metal ion to one of the said fillers, a filler prepared by adsorbing or binding a protein to aminated silica gel, a filler packed with a crown ether, a urea derivative chiral to silica gel treated with (3-aminopropyl)triethoxysilane, N(3,5-dinitrobenzoyl)-R-phenylglycine, DNB-L-leucine, (S)-1-(α-naphtyl)-ethylamine and a filler bonding to (S)-2-(4-chlorophenyl) isovaleric acid. Depending on the kind of the platinum complex compound to be optically resoluted, one kind of these filler or two or more kinds thereof may be employed.

By exploiting such an HPLC method employing these chiral fillers in the separation column, a complete resolution of the mixture into a dextrorotatory substance and a levorotatory substance or a partial (incomplete) resolution can be easily an exactly determined. The amounts of residual "impurity" can be accurately determined by comparing the areas of the peaks of the two optically active substances appearing on the chromatograph. Since such a peak area comparison method may utilize ultraviolet ray for detection, its sensitivity is vastly better than the sensitivities of conventional test methods, employing an angle of rotation or circular duchroism as test parameters.

A number of examples are reported hereinbelow for better illustrating the invention. They are not intended to restrict the scope of the invention being claimed.

*PREPARATION AND OPTICAL RESOLUTION*

Example 1

After 56.25 g of potassium tetrachloroplatinate and 15.48 g of trans-d l-1,2 cyclohexanediamine were dissolved in water and mixed to proceed a reaction for three hours under agitation, the solution was filtered to obtain yellow needles of cis-dichloro(trans-dl-1,2-cyclohexanediamine) Pt(II). After this compound was suspended in 0.57 liter of water and a solution prepared by adding 38.64 g of silver nitrate to 0.28 liter of water was added thereto followed by agitation for tliree days at room temperature in the dark, the precipitate of silver nitrate was filtered off and removed. The deionization of such an ion as a silver ion, a nitrate ion, a halogen ion and a potassium ion dissolved in the filtrate was performed by passing the filtrate through a reverse osmosis membrane (Milipore K.K., NF 40, molecular weight to be divided: 400) at a pressure of 30 kgf/$cm^2$.

After active carbon was added to the solution for decolorization, the active carbon was completely removed by filtration. Addition of 14.63 g of oxalic acid to the filtrate and agitation for three hours produced a crude crystal of cis-oxalato(trans-dl-1,2-cyclohexanediamino) Pt(II) at a yield of 80 %.

Then, the desired cis-oxalato(trans-l-1,2-cyclohexanediamine) Pt(II) (=$(+)_{589}$ -cis-[Pt(OX)(R,R-dach)]) (hereinafter also referred to as "d-isomer") was resoluted from the cis-oxalato(trans-d-1,2-cyclohexanediamine Pt(II) (=$(-)_{689}$ -cis-[Pt(OX)(S,S-dach)]) (hereinafter also referred to as "l-isomer") employing a solution prepared by dissolving 22.4 mg of the above crude crystal into 50 ml of methanol as a sample and employing high performance liquid chromatography (HPLC method) under the following conditions, and further the optical purity was determined.

Column: Glass-column having a height of 25 cm and an inner diameter of 4.6 mm packed with OC (Daicel Chemical Industries, Ltd., a filler prepared by adsorbing a cellulose carbamate derivative to silica gel)
Mobile phase: ethanol/methanol-30:70 (volume ratio)
Flow rate: 0.2 ml/min.
Column temperature: 40 °C
Detection: ultraviolet ray 254 nm
optical rotation 589 nm

The chromatogram of the optical resolution carriod out under the said conditions is shown in Fig.1. The upper portion of Fig.1 shows an amount of elution as a relative absorption amount of ultraviolet ray at 254 nm, and the lower portion of Fig.1 shows an amount of elution as a relative degree of rotation. The optical purity of the

$(+)_{589}$-cis-[Pt(OX)(R,R-dach)]

obtained was 100 %

($(-)_{589}$-cis-[Pt(OX)(S,S-dach)] was below 0.05 %).

The optical purity was determined by means of an internal standard method. employing the standard

$(+)_{589}$-cis-[Pt(OX)(R,R-dach)]

of the HPLC method as an internal standard.

At first, a calibration curve was prepared by plotting the ratios of component amouts of the standard l-isomer and the standard d-isomer to the ratios of the peak heights of the standard

$(-)_{589}$-cis-[Pt(OX)(S,S-dach)]

and the standard

$(+)_{589}$-cis-[Pt(OX)(R,R-dach)].

Then, the amounts of the d-isomers of Examples and Comparative Examples were measured by means of the HPLC method under the same conditions, and from the peak ratio obtained, the amounts of the examined components were determeined and the content rates of the l isomer in the sample were calculated.

Then, the optical purity was calculated as e.e. (excess rate of an enantiomer) in accordance with the following equation employing the content rates of the l-isomer calsulated.

Optical Purity (%) = e.e. (%) = [{(content rate of d-isomer) - (content rate of l-isomer)}/{(content rate of d-isomer) + (content rate of l-isomer)}] X 100

The maximum relative standard deviation (RSD) in this case was about 0.1 %, and the correlation coefficient of the linearity of the calibration curve was 0.9995628 showing the excellent linearity.

## Comparative Example 1

The crude crystal of the cis-oxalato(trans-l-1,2-cyclohexanediamine) Pt(II) was obtained in accordance with the same procedures of Example 1 except that in place of the trans-l-1,2-cyclohexanediamine of Example 1 which had not been optically resoluted, three kinds of trans-l-1,2-cyclohexanediamine which had been already optically resoluted and made by Aldrich, Tokyo Kasei K.K. and Wako Junyaku K.K. were employed.

Without the treatment by the chromatography method, the respective optical purities of the three crude crystals were measured to be 98.5 %. This shows that the platinum complex compound obtained was the mixture of the two optically active substances even if the optically active compound was employed as starting material.

Example 2

The platinum complex compound of Formula (10) was prepared in accordance with the same procedures of Example 1 except that trimellitic acid

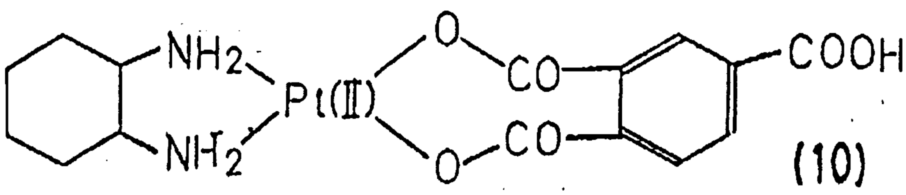

(10)

(1,3,4-tribenzene carboxylic acid) was employed in place of the oxalic acid (the compound was decomposed not less than 300 °C).

The optical purity of this platinum complex compound was determined in accordance with the same HPLC method of Example 1. The maximum relative standard deviation in this case was about 0.5 %, and the correlation coefficient of the linearity of the calibration curve was 0.9993281 showing the excellent linearity.

Example 3

The crude crystal of the cis-oxalato(trans-l-1,2-cyclohexanediamine) Pt(II) was obtained in accordance with the same procedures of Example 1 except that OJ (Daicel Chemical Industries, Ltd., a filler prepared by adsorbing a cellulose ester derivative to silica gel) was employed as a filler of column in place of OC.

The optical purity of this platinum complex compound was determined in accordance with the same HPLC method of Example 1. The maximum relative standard deviation in this case was about 1.0 %, and the correlation coefficient of the linearity of the calibration curve was 0.9971753 showing the excellent linearity.

Example 4

The crude crystal of the cis-oxalato(trans-l-1,2-cyclohexanediamine) Pt(II) was obtained in accordance with the same procedures of Example 1 except that AD (Daicel Chemical Industries, Ltd., a filler prepared by adsorbing an amylose carbamate derivative to silica gel) was employed as a filler of column in place of OC.

The optical purity of this platinum complex compound was determined in accordance with the same HPLC method of Example 1. The maximum relative standard deviation in this case was about 1.5 %, and the correlation coefficient of the linearity of the calibration curve was 0.9965372 showing the excellent linearity.

Example 5

The optical purity of an injection prepared by adding glucose to the cis-oxalato (trans-l-1,2-cyclohexanediamine) Pt(II) obtained in Example 1 was determined as follows.

At first, after 300 mg of this injection was suspended in 50 ml of methanol followed by two hours' stirring, the insoluble substances were removed by means of centrifugation for 30 minutes at 3000 rpm. Then, the filtration of the supernatant was conducted employing a membrane filter to provide a sample solution for HPLC. The conditions for HPLC were as follows.

Column: Stainless-column having a height of 25 cm and an inner diameter of 4.6 mm packed with OC (Daicel Chemical Industries, Ltd., a filler prepared by adsorbing a cellulose carbamate derivative to silica gel)
Mobile phase: ethanol/methanol=30:70 (volume ratio)
Flow rate: 0.2 ml/min.
Column temperature: 40 °C
Detection: ultraviolet ray 254 nm

The relative standard deviation in this caso was 0.1 %, the correlation coefficient of the linoarity of the calibration curvo was 0.9995628, and the optical purity of the injection was 100 e.e. expressed as an enantiomer excess rate.

Pt COMPLEX HAVING ENHANCED CARCINOSTATIC AND THERAPEUTIC PROPERTIES

A cis-oxalato (trans-l-1,2-cyclohexanediamine) Pt(II) represented by Formula (1) and having an optically high purity according to the invention may be prepared as follows.

Commercially available 1,2-cyclohexanediamine (for instance, trans-l-1,2 cyclohexanediamine made by Aldrich, cis and and trans-dl mixed 1,2-cyclohexanediamine made by Tokyo Kasei K.K.) may be employed. The compounds made by Aldrich and Wako Junyaku were employed without further treatment because of their relatively high purity, and the geometrical isomers of cis and trans that made by Tokyo Kasei may be resoluted and purified in accordance with such a known process as that disclosed in Japanese patent publication No.61-4827. The optical resolution of the trans isomer may be conducted by forming a diastereoisomer in accordance with a normal method by means of tartaric acid and employing a recrystallization method.

A crystal of cis-dichloro(trans-l-1,2-cyclohexanediamine) Pt(II) represented in Formula (2') may be obtained by a reaction between the trans-l-1,2-cyclohexanediamine previously obtained and an equivalent weight of potassium tetrachloroplatinate [$K_2PtCl_4$] dissolved in water at room temperature over 10 hours.

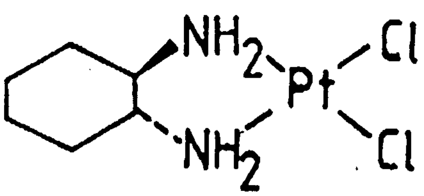

(2')

After the compound represented in Formula(2') is suspended in water followed by the addition of two equivalent weights of an aqueous solution of silver nitrate, the reaction is allowed to proceed over 24 hours in the dark followed by the removal of silver chloride by means of filtration to produce an aqueous solution of cis-diaquo(trans-l-1,2-cyclohexanediamine) Pt(II) nitrate represented in Formula(3') After potassium iodide is added to this solution followed by the removal of the excess silver ion as silver iodide by means of filtration and the decolorization and purification by active carbon, an equivalent weight of oxalic acid in respect to the potassium tetrachloroplatinate is added to produce a crude crystal of cis-oxalato(trans-l-1,2-cyclohexanediamine) Pt(II) after the two hours reaction. Cis-oxalato(trans-l-1,2-cyclohexanediamine) Pt(II) obtained by the recrystallization of the said crude crystal from hot water is a mixture with cis-oxalato(trans-d-1,2-cyclohexanediamine) Pt(II) which is an optical isomer thereof.

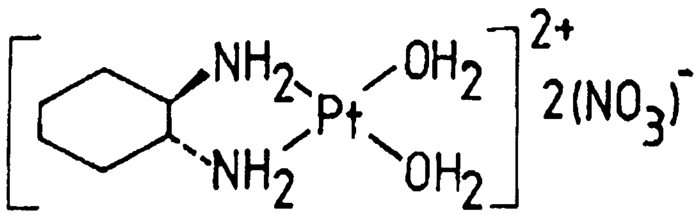

(3')

Then, the recrystallized crystal is completely isolated as cis-oxalato (trans-l-1,2 cyclohexanediamine) Pt(II) in accordance with the process of resoluting and purifying the optically active Pt(II) isomers after the crystal is dissolved in water. That is, the cis-oxalato(trans-l-1,2-cyclohexanediamine) Pt(II) contaminated with no optical isomers can be obtained by freeze drying an aqueous solution separately eluted by means of high performance liquid chromatography (hereinafter referred to as "HPLC"), for example, under the following conditions.

Separation column: 4.6 mm of inner diameter and 25 cm of of height packed with OC of Daicel Chemical Industries, Ltd.
Mobile phase: ethanol/methanol=30:70 (volume ratio)
Flow rate: 0.2 ml/min.
Column temperature: 40 °C

Detector: ultraviolet ray 254 nm
optical rotation 589 nm

The cis-oxalato(trans-l-1,2-cyclohexanediamine) Pt(II) having the high optical purity in accordance with the present invention is active against a tumor "leukemia L1210" and effective as carcinostatic agent.

Example A

① Preparation of cis-dichloro-(trans-l-1,2-cyclohexanediamine) Pt(II)

A reaction between 46.8 g of trans-l-1,2-cyclohexanediamine made by Aldrich ($[\alpha]^{19}_D$ = -35.6° , 4% $H_2O$) and 170 g of potassium tetrachloro platinate (made by Tanaka Kikinzoku Kogyo K.K.) in an aqueous solution at room temperature over 10 hours yielded yellow needles of cis-dichloro(trans-l-1,2-cyclohexanediamine) Pt(II). Yield: 99 %.

② Preparation of cis-diaquo(trans-l-1,2-cyclohexanediamine) Pt (II) nitrate

The cis dichloro(trans-l-1,2-cyclohexanediamine) Pt(II) obtained above was suspended in 1.6 liters of water to which was added two molar volumes of silver nitrate for proceeding a reaction in the dark over 24 hours, and the silver chloride produced during the reaction was filtered off. After 4.8 g of potassium iodide was added to this filtrate followed by the precipitation of the excess silver ion as silver iodide produced during the reaction of over 12 hours, 1 g of active carbon for purification and decolorization was added which was then filtered off together with the silver iodide.

③ Preparation of cis-oxalato(trans-l-1,2-cyclohexanediamine) Pt(II)

To the filtrate obtained above was added 48 g of oxalic acid dihydrate to yield 90 g of a white crude crystal after a two hours' reaction.

Then, 80 g of this crude crystal was recrystallized from three liters of hot water, and 45 g of the obtained crystal was dissolved into 9 liters of water. HPLC was conducted employing the solution under the following conditions to obtain a chromatographof Fig. 2.

Column for optical resolution: Column having a length of 50 cm and an inner diameter of 5 cm packed with OC (Daicel Chemical Industries, Ltd., a filler prepared by adsorbing a cellulose carbamate derivative to silica gel)
Mobile phase: ethanol/methanol=30:70 (volume ratio)
Flow rate: 2.0 ml/min.
Column temperature: 40 °C
Detection: ultraviolet ray 254 nm
optical rotation 589 nm

The upper portion of Fig. 2 shows an amount of elution per unit time as a relative absorption amount of ultraviolet ray at 254 nm, and the lower portion of Fig. 2 shows an amount of elution per unit time as a relative degree of rotation. At a retention time ($t_R$) of 25 minutes, cis-oxalato(trans d-1,2-cyclohexanediamine) Pt(II was found to be contaminated. The optical purity of the cis-oxalato(trans-l-1,2-cyclohexanediamine) Pt(II) prepared by employing the trans-l-1,2-cyclohexanediamine made by Aldrich ($[\alpha]^{19}_D$ = -35.6°, 4% $H_2O$) was calculated in accordance with a below equation to be 88.5 % of an enantiomer excess rate (Table 1). Then, cis-oxalato(trans-l-1,2-cyclohexanediamine) Pt(II) of 100 % of an optical purity (e.e.) was obtained by collecting an aqueous solution eluted in fractions from 15 minutes to 22 minutes ($t_R$) followed by freeze drying. Yield: 39.8 g, 50 % (based on the crude crystal).

[Equation for calculating optical purity]

Optical purity (%) - e.e. (%) = {([content of cis-oxalato(trans-l-1,2-cyclohexanediamine) Pt(II)] - [content of [cis-oxalato(trans-d-1,2-cyclohexanediamine) Pt(II)])/([content of cis-oxalato(trans-l-1,2-cyclohexanediamine) Pt(II)] +[content of [cis-oxalato(trans-d-1,2-cyclohexanediamine) Pt(II)])} X 100 (e.e.: enantiomer excess rate)

Example B

① Resolution of cis and trans geometrical isomers

To a solution prepared by dissolving 100 g of cis, trans-dl-mixed-1,2-cyclohexanediamie into 640 ml of methanol

was added a solution prepared by dissolving 104 g of nickel chloride [$NiCl_2.6H_2O$] into 1760 ml of methanol which was then reacted at room temperature for 2 hours under stirring. A precipitated yellow crystal [Ni(cis-1,2-cyclohexanediamine)$Cl_2$ (31.6 g) ]was filtered and washed with methanol and air-dried. To this crystal was added 140 ml of 6-normal hydrochloric acid and then its pH was adjusted to 4,2 ~ 4.5 with 15 % sodium hydroxide aqueous solution. After a precipitated royal purple crystal [Ni(trans-dl-1,2-cyclohexanediamine) $(H_2O)_2Cl_2$] (72.0 g) was filtered and washed, 120 ml of 6-normal hydrochloric acid was added thereto. It was concentrated under a reduced pressure followed by addition of 600 ml of ethanol and 600 ml of acotone to obtain colorless precipitate [trans-dl-1,2-cyclohexanediamine.2HCl] (42.54 g) after filtration which was then washed with ethanol-acetone. After this was extracted with chloroform and dried with potassium carbonate. A colorless liquid [trans-dl-1,2-cyclohexanediamine (35.5 g)] ($[\alpha]^{19}_D$ = 0° , 4% $H_2O$) was obtained. A single peak appeared on a gas chromatographat $t_R$=3.643 minutes.

Fig. 3 is a gas chromatograph of trans-dl-1,2-cyclohexanediamine.

The gas chromatography was conducted under the following conditions.

Column: CP-Cyclodextrin-B-236-M-19 50 m X 0.25 mm (inner diameter) df-0.25 μm
Column temperature: 200 °C
Carrier gas: $N_2$, 2 kg/$cm^2$
Injector temperature: 200 °C
Detector: FID (200 °C)
Sample volume: 1 μl

② Optical resolution of trans-dl-1,2-cyclohexanediamine

To 35.5 g of the trans-dl-1,2-cyclohexanediamine previously obtained was added 671 ml of water for dissolving under heating at 90 °C. The standing thereof for 12 hours after the gradual addition of 22.10 g of d-tartaric acid and 13.4 ml of glacial acetic acid produced 16.23 g of a diastereoisomer (trans-l-1,2-cyclohexanediamine-(+)-tartaric acid. This was recrystallized from water twice. No further change of the rotation of angle was observed after the repeated recrystallization as shown in Fig. 3.

After 9.23 g of the diastereoisomer obtained was dissolved into a small amount of water followed by the addition of 5.64 g of sodium hydroxide, it was extracted with ether and was distilled under a reduced pressure to obtain 3.20 g of a colorless liquid, trans-l-1,2-cyclohexanediamine,

③ Preparation of cis-dichloro(trans-l-1,2-cyclohexanediamine) Pt(II)

In accordance with the same procedures as those of ① of Example A except that the trans-l-1,2-cyclohexanediamine obtained in ② of Example B was employed as raw material in place of the trans-l-1,2-cyclohexanediamine made by Aldrich of ① of Example A, 9 g of the corresponding Pt(II) complex was obtained.

④ Preparation of cis-diaquo(trans-l-1,2-cyclohexanediamine) Pt(II) nitrate

In accordance with the same procedures as those of ② of Example A except that the Pt(II) complex obtained in ③ of Example B was employed in place of cis-dichloro(trans-l-1,2-cyclohexanediamine) Pt(II) obtained in ① of Example A, an aqueous solution of the desired Pt(II) complex was obtained.

⑤ Preparation of cis-oxalato(trans-l-1,2-cyclohexanediamine) Pt(II)

In accordance with the same procedures as those of ③ of Example A except that the aqueous solution of the Pt(II) complex obtained in ④ of Example B was employed in place of the aqueous solution of the Pt(II) complex obtained in ② of Example A, 7 g of a crude crystal of cis-oxalato(trans-l-1,2-cyclohexanediamine) Pt(II) was obtained. After the recrystallization of this crude crystal from hot water was conducted, 4 g of the recrystallized crystal was dissolved into 800 ml of water. The HPLC of this solution under the same conditions of those of ③ of Example A revealed that cis-oxalato(trans-d-1,2-cyclohexanediamine) Pt(II) which was an optical isomer was apparently contaminated at $t_R$=25 minutes as shown in Fig. 2.

The optical purity of the cis-oxalato(trans-l-1,2-cyclohexanediamine) Pt(II) synthesized by employing the raw material isolated in accordance with a process of resoluting and purifying isomers (Japanese patent application No. 61-4827) was e.e.= 90.0 % in accordance with the equations of ③ of Example A as shown in Table 1. Then, cis-oxalato(trans-l-1,2-cyclohexanediamine) Pt(II) of 100 % of an optical purity (e.e.) was obtained by collecting an aqueous solution cluted in fractions from 15 minutes to 22 minutes ($t_R$) followed by freeze drying. Yield: 3.6 g, 51 % (based on the crude crystal).

Example C

① Preparation of cis-dichloro(trans-l-1,2-cyclohexanediamine) Pt(II)

In accordance with the same procedures as those of ① of Example A except that the trans-l-1,2-cyclohexanediamine made by Wako Junyaku K.K. ($[\alpha]^{19}_D$ = -34.9° , 4% $H_2O$) was employed in place of the trans-l-1,2-cyclohexanediamine made by Aldrich of ① of Example A 150 g of the corresponding Pt(II) complex was obtained.

② Preparation of cis-diaquo(trans-l-1,2-cyclohexanediamie) Pt(II) nitrate

In accordance with the same procedures as those of ② of Example A except that the Pt(II) complex obtained in ① of Example C was employed in place of cis-dichloro(trans-l-1,2-cyclohexanediamine) Pt(II) obtained in ① of Example A, an aqueous solution of the desired cis-diaquo(trans-l-1,2-cyclohexanediamine) Pt(II) nitrate was obtained.

③ Preparation of cis-oxalato(trans-l-1,2-cyclohexanediamine) Pt(II)

In accordance with the same procedures as those of ③ of Example A except that the aqueous solution of the Pt(II) complex obtained in ② of Example C was employed in place of the aqueous solution of the Pt(II) complex obtained in ② of Example A, 90 g of a crude crystal of cis-oxalato(trans-l-1,2-cyclohexanediamine) Pt(II) was obtained. After the recrystallization of this crude crystal from hot water was conducted, 45 g of the recrystallized crystal was dissolved into 9 liters of water. The HPLC of this solution under the same conditions of those of ③ of Example A revealed that cis-oxalato(trans-d-1,2-cyclohexanediamine) Pt(II) which was an optical isomer was apparently contaminated at $t_R$=25 minutes as shown in Fig.2. The optical purity of the cis-oxalato(trans-l-1,2-cyclohexanediamine) Pt(II) synthesized by employing trans-l-1,2-cyclohexanediamine made by Wako Junyaku K.K. as raw material was e.e.= 86.8 % in accordance with the equations of ③ of Example A as shown in Table 1. Then, cis-oxalato(trans-l-1,2- cyclohexanediamine) Pt(II) of 100 % of an optical purity (e.e.) was obtained by collecting an aqueous solution eluted in fractions from 15 minutes to 22 minutes ($t_R$) followed by freeze drying. Yield: 39.1 g. 43 % (based on the crude crystal).

Comparative Example

For comparing and evaluating the optical purity, the physicochemical properties and the biological properties obtained in accordance with the present invention, the cis-oxalate (trans-l-1,2-cyclohexanediamine) Pt(II) was synthesized as Comparative Example by employing the raw material made by Tokyo Kasei K.K. in accordance with the following procedures disclosed in Japanese patent publication No.60-41077.

To 3 g of cis-dichloro(trans-l-1,2-cyclohexanediamine) Pt(II) was added 500 ml of water followed by the boiling thereof for dissolution. After two moles of $AgNo_3$ (2.6 g) were added and was stirred for 2 to 3 hours in the dark, the filtrations were repeated until the filtrate became transparent. After the filtrate was concentrated under a reduced pressure to 100 ml, 1.3 g of potassium oxalate was added to the concentrated solution followed by standing for 8 hours at room temperature. The solution was again concentrated at a reduced pressure to produce white crystalline precipitate. The precipitated was recrystallized from water.

The comparisons of the optical purity between the cis oxalato(trans-l-1,2-cyclohexanediamine) Pt(II) of Examples A, B, C and Comparative Example, that of the physicochemical properties and that of the biological properties are shown in Table 1, Table 3 and Table 4, respectively.

No difference is recognized between the compounds of Examples and Comparative Examples in connection with their properties, elemental analysis (C,H,N) and infrared spectra in Table 3. However, the melting points of the compounds of Examples A to C are lower than that of Comparative Example. This fact indicates that while the cis-oxalato(trans-l-1,2-cyclohexanediamine) Pt(II) conventionally obtained is contaminated with such an impurity of its optical isomer, the cis-oxalato(trans-l-1,2-cyclohexanediamine) Pt(II) obtained in Examples A, B, C, of the present invention is not contaminated with impurities.

Table 4 shows an acute toxicity test ($LD_{60}$) and a resistance against a tumor of L1210 of cis-oxalato(trans-l-1,2-cyclohexanediamine) Pt(II). The test was conducted by prescribing L1210 in a peritoneal cavity of six $CDF_1$ mice/one group (the number of transplanted cells is $10^6$ per mouse and prescribing the medicine in the peritoneal cavity on a first day, a fifth day and a ninth day.

Table 1

Optical Purity of Cis-Oxalato(Trans-l-1,2-Cyclohexanediamine) Pt(II)

| Experiment | Raw Material | Optical Purity (e.e. %) Before Resolution By HPLC | → | After Resolution By HPLC |
|---|---|---|---|---|
| Example A | Aldrich | 88.5 | → | 100 |
| Example B | Tokyo Kasei | 90.0 | → | 100 |
| Example C | Wako Junyaku | 86.8 | → | 100 |
| Com. Ex. | Tokyo Kasei | 90.0 | → | 100 |

Table 2

Angle of Rotation of trans-l-1,2-cyclohexanediamine-(+)-tartaric acid

| Tokyo Kasei (Lot No. FBZ01) | $[\alpha]^{18}_{D}$ (1 % $H_2O$) |
|---|---|
| Before Recrystallization | +12.0° ± 0.1° |
| After One Recrystallization | +12.1° ± 0.1° |
| After two Recrystallizations | +12.1° ± 0.1° |

Table 3

Physicochemical Properties of

cis-oxalato(trans l-1,2-cyclohexanediamine)Pt(II)

| Experiment | Melting Point | CD (Δ ε) | [α] $^{20}_{D}$ (0.5%, $H_2O$) |
|---|---|---|---|
| Example A ※<br>Example B ※<br>Example C ※ | 198.3~<br>199.7°C | 255nm<br>+0.67±0.19<br>324nm<br>+0.61±0.10 | > 74.5 ℃ |
| Comp. Ex.<br>(JP Publi.<br>No.60-41077) | > 300 ℃ | not<br>mentioned | not mentioned |

※ High Purity Sample Prepared by HPLC

Table 4

Acute Toxicity Test and Tumor Resistance Against L1210 of Cis-Oxalato(Trans-l-1,2-cyclohexamediamine) Pt(II)

| Experiment | Acute Toxicity Test $LD_{50}$ | Tumor Resistance T/C (%) (mg/kg) | | | | | |
|---|---|---|---|---|---|---|---|
| | | 25 | 12.5 | 6.25 | 3.12 | 1.56 | 0.78 |
| Example A ※<br>Example B ※<br>Example C ※ | 18.2 ~ 20.8 mouse IP | T<br>129P | 280P<br>(2/6) | 311P<br>(3/6) | 207P | 158P | 132P |
| Comp. Ex. | 14.8 ~ 19.0 mouse IP | T 81 | 308P<br>(4/6) | 253P<br>(1/6) | 191P | 158P | —— |

※ High Purity Sample Prepared by HPLC

P: Effective (Over 125 %)

T: Toxic (Large Weight Loss)

(3/6): This means that three out of six was cured.

## Claims

1. A process of optically resolving an optically active platinum complex compound characterized by comprising the following steps:

   subjecting a solution of a d-isomer and of an l-isomer of a platinum complex compound to be resolved to a high performace liquid chromatrography using a separation column packed with a chiral filler;
   recovering an eluted solution of one of the two optically active isomers of the

   compound.

2. The process as defined in claim 1, wherein the optically active platinum complex compound has the following general formula

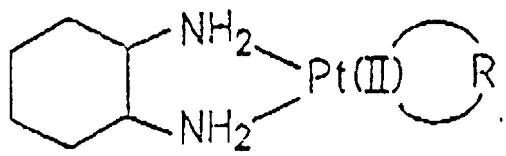

wherein R is a chemical structure belonging to the group composed of the following structures:

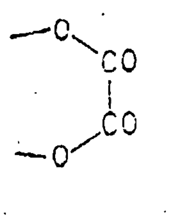

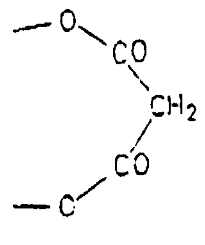

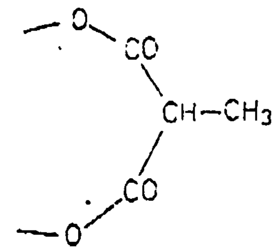

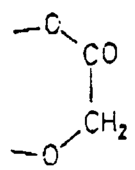

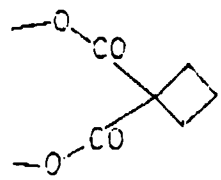

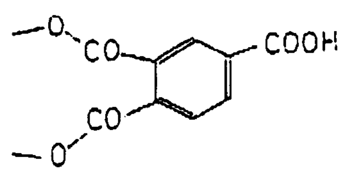

**3.** The process according to claim 2. wherein the eluted and recovered isomer is the l-isomer and the chiral filler used in the separation column belongs to the group consisting of a cellulose ester derivative, a cellulose carbamate derivative, an amylose carbamate derivative a polymethacryl acid ester, β-and-γ-cyclodextrin a polymethacrylamine derivative, an acidic glycoprotein, L-proline, hydroxyproline, L-valine, a filler prepared by adsorbing or binding (1R, 2S)-2-carboxymetylamino-1,2-diphenylethanol to silica gel, a filler prepared by coordinating a metal ion to one or the said fillers, a filler prepared by adsorbing or binding a protein to aminated silica gel, a filler packed with a crown other, a urea chiral derivative to silica gel treated with (3-aminopropyl) triethoxysilane, N(3,5-dinitrobenzoyl)-(R)-phenylglycine, DNB-L-leucine, (S)-l-(α-naphtyl)-ethylamine and a filler chemically bonding to (S)-2-(4-chlorophenyl) isovaloric acid.

**4.** Optically pure cis-oxalato (trans-l-1,2-cyclohexanediamine) Pt(II) as obtained through the process of optical resolution defined in claims 1 to 3 having the following general formula:

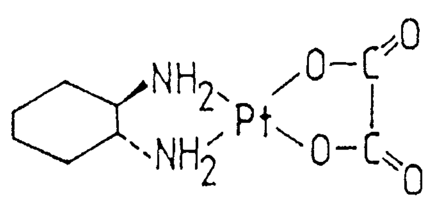

**Patentansprüche**

**1.** Ein Verfahren der optischen Auflösung einer optisch aktiven Platinkomplex-Verbindung, dadurch gekennzeichnet, daß es die folgenden Schritte umfaßt:

Unterwerfen einer aufzulösenden Lösung aus einem d-Isomer und einem l-Isomer einer Platinkomplex-Verbindung einer Hochleistungsflüssigchromatographie unter Verwendung einer mit einem chiralen Füllstoff gepackten Trennsäule,

Gewinnen einer eluierten Lösung von einem der zwei optisch aktiven Isomere der Verbindung.

2. Das Verfahren nach Anspruch 1, dadurch gekennzeichnet, daß die optisch aktive Platinkomplexverbindung die folgende allgemeine Formel hat:

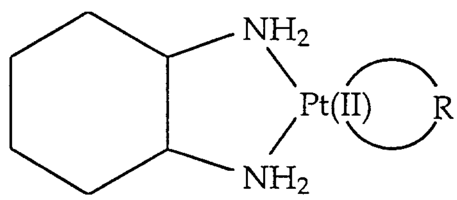

worin R eine chemische Struktur ist, die zu der Gruppe gehört, die aus den folgenden Strukturen besteht:

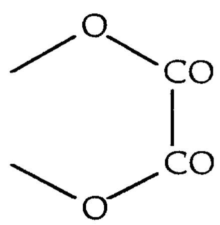
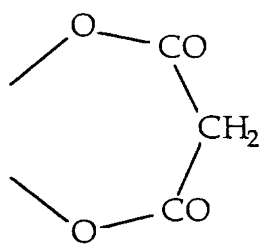
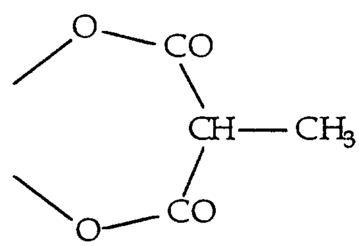
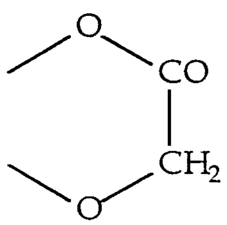
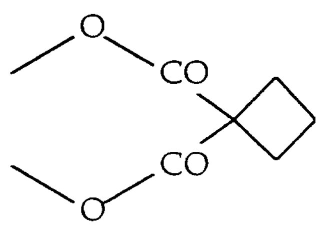
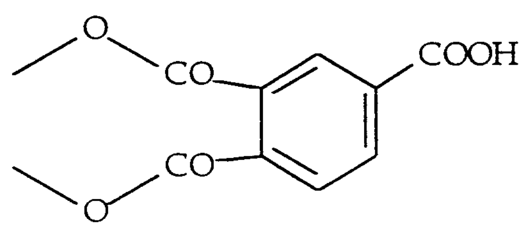

3. Das Verfahren gemäß Anspruch 2, dadurch gekennzeichnet, daß das eluierte und gewonnene Isomer, das l-Isomer ist, und der in der Trennsäule verwendete chirale Füllstoff zu der Gruppe gehört, die aus einem Celluloseesterderivat, einem Cellulosecarbamat-Derivat, einem Amylosecarbamat-Derivat, einem Polymethacrylsäureester, β- und-γ-Cyclodextrin, einem Polymethacrylamid-Derivat, einem sauren Glycoprotein, L-Prolin, Hydroxyprolin, L-Valin, einem Füllstoff, der durch Adsorbieren oder Binden von (1R,2S)-2-Carboxymethylamino-1,2-diphenylethanol an Silicagel hergestellt wurde, einem Füllstoff, der durch Koordinieren eines Metalliones an einen der besagten Füllstoffe hergestellt wurde, einem Füllstoff, der durch Adsorbieren oder Binden eines Proteins an aminiertes Silicagel hergestellt wurde, einem mit einem Kronenether gepackten Füllstoff, einem zu Silikagel chiralem Harnstoffderivat, das mit (3-Aminopropyl)-triethoxysilan, N(3,5)-Dinitrobenzoyl)-(R)-phenylglycin, DNB-L-Leucin, (s)-1-(α-Naphtyl)-ethylamin behandelt wurde, und einem Füllstoff, der chemisch an (s)-2-(4-Chlorphenyl)isovaleriansäure gebunden ist, besteht.

4. Optisch reines Cis-oxalato(trans-l-1,2-Cyclohexandiamin)Pt(II), das durch das Verfahren der optischen Auflösung, das in den Ansprüchen 1 bis 3 definiert ist, erhalten wurde, dadurch gekennzeichnet, daß es die folgende allgemeine Formel hat:

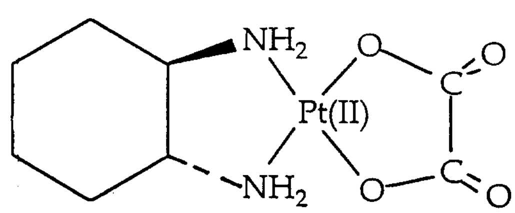

## Revendications

1. Procédé de résolution optique d'un complexe de platine optiquement actif caractérisé en ce qu'il comprend les étapes suivantes :

   soumettre une solution d'un isomère dextrogyre et d'un isomère lévogyre d'un complexe de platine à résoudre à une chromatographie liquide à hautes performances en utilisant une colonne de séparation garnie d'une charge chirale ;
   récupérer une solution éluée de l'un des deux isomères optiquement actifs du composé.

2. Procédé selon la revendication 1, dans lequel le complexe de platine optiquement actif a la formule générale suivante :

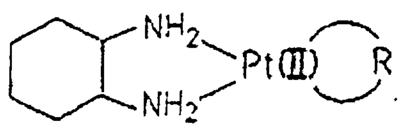

   où R est une structure chimique appartenant au groupe constitué des structures suivantes :

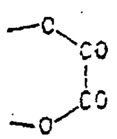
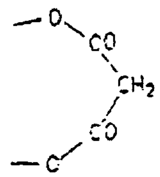
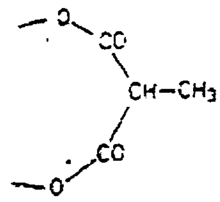
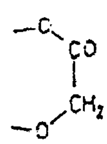
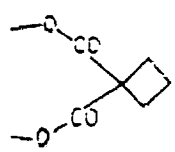
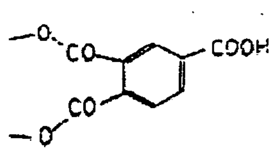

3. Procédé selon la revendication 2, dans lequel l'isomère élué et récupéré est l'isomère lévogyre et la charge chirale utilisée dans la colonne de séparation appartient au groupe comprenant un dérivé d'ester de cellulose, un dérivé de carbamate de cellulose, un dérivé de carbamate d'amylose, un ester acide de polyméthacryle, β- et γ-cyclodextrine, un dérivé de polyméthacrylamine, une glycoprotéine acide, L-proline, hydroxyproline, L-valine, une charge préparée en adsorbant ou en liant (1R, 2S)-2-carboxymethylamino-1.2-diphényléthanol à un gel de silice, une charge préparée en coordonnant un ion métallique à l'une desdites charges, une charge préparée en adsorbant ou en liant une protéine à un gel de silice aminé, une charge comprenant un éther en couronne, un dérivé chiral d'urée dérivé d'un gel de silice traité avec (3-aminopropyl)triéthoxysilane, N(3,5-dinitrobenzyl)-(R)-phénylglycine, DNB-L-leucine, (S)-l-(α-naphtyl)-éthylamine et une charge se liant chimiquement à l'acide (S)-2-(4-chlorophényl) isovalérique.

4. Cis-oxalato(trans-l-1,2-cyclohexanediamine)Pt(II) optiquement pur tel qu'obtenu par le procédé de résolution optique selon l'une des revendications 1 à 3, ayant la formule générale :

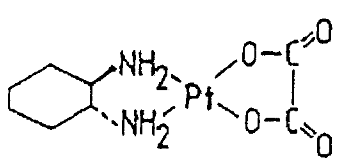

Resolution of d-isomer and l-isomer

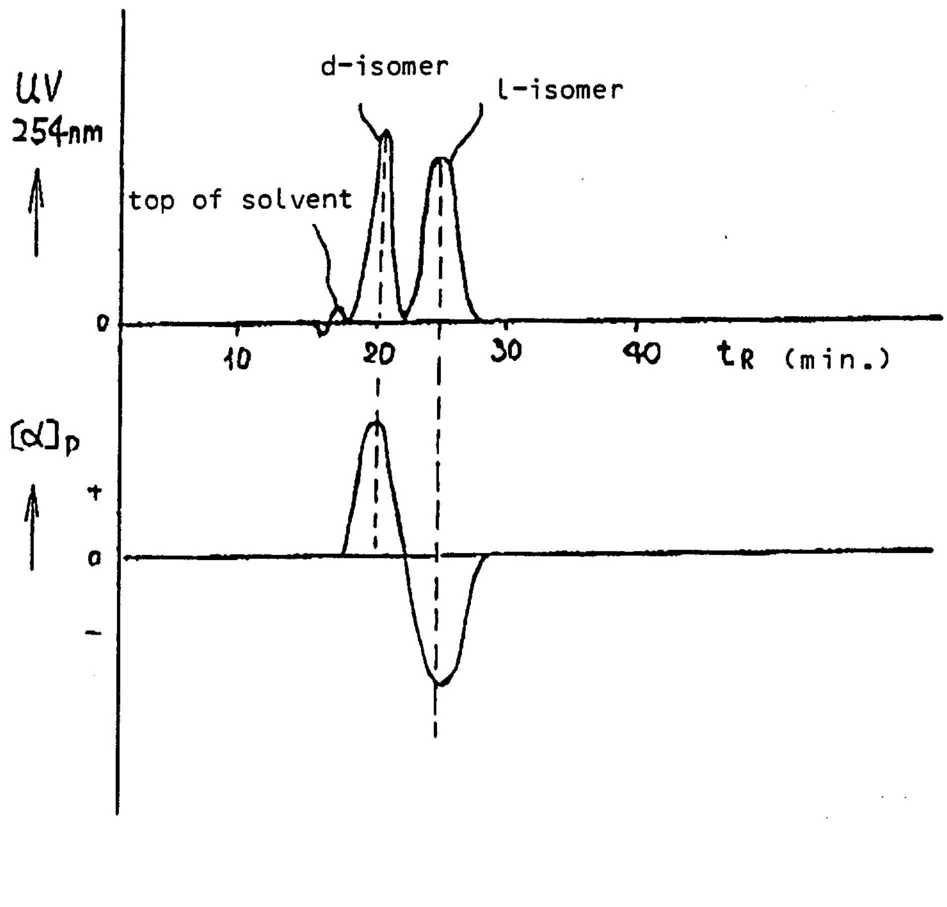


FIG. 1

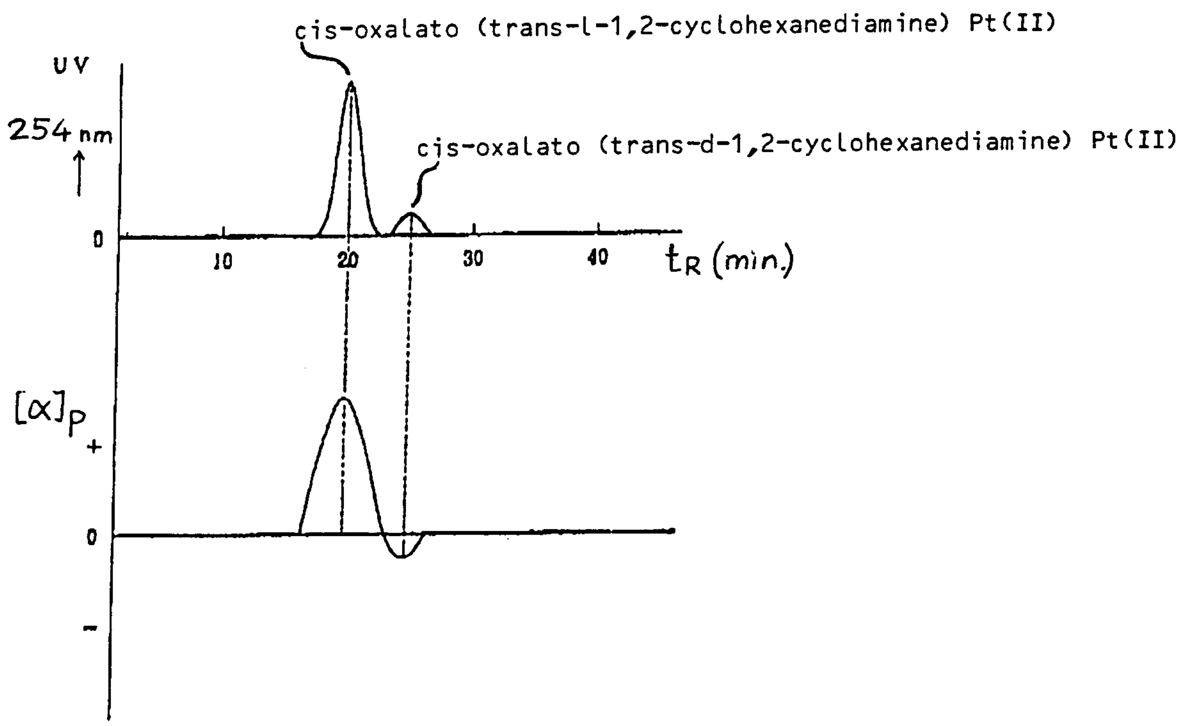
cis-oxalato (trans-l-1,2-cyclohexanediamine) Pt(II)
cis-oxalato (trans-d-1,2-cyclohexanediamine) Pt(II)
UV
254 nm
0
10
20
30
40
tR (min.)
[α]P
+
0
-

FIG. 2

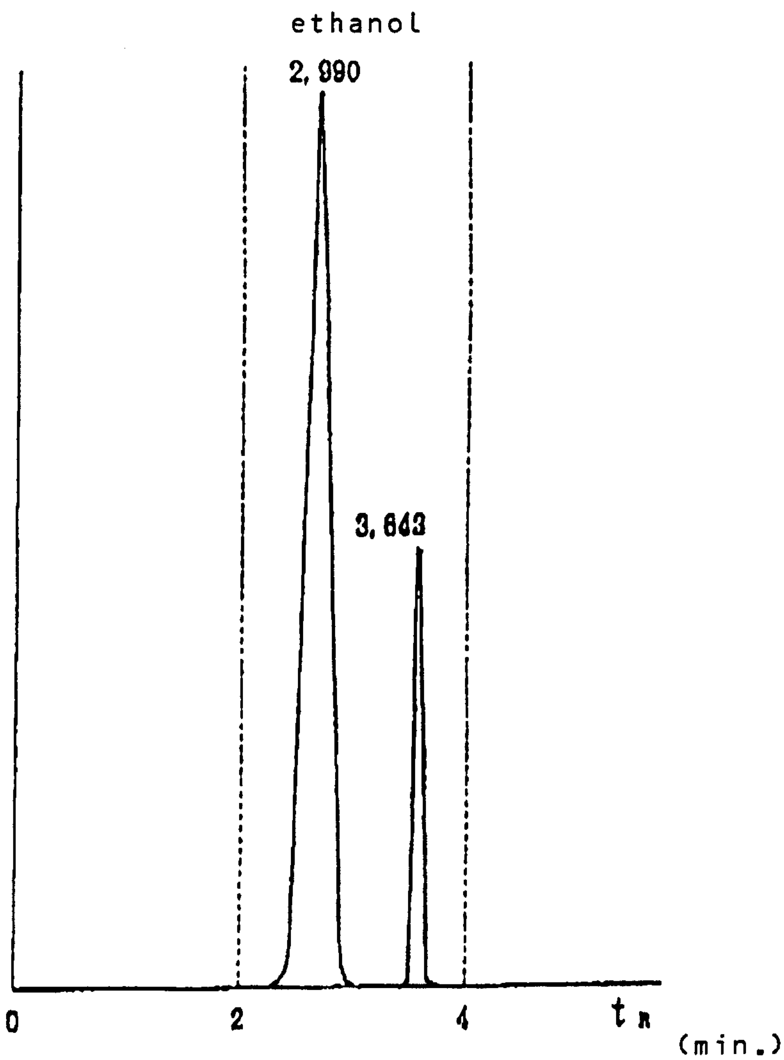


Gas Chromatograph of trans-dl-1,2-cyclohexanediamine

FIG. 3